# EUROPÄISCHE PATENTSCHRIFT

(11) **EP 3 826 897 B1**
(45) Veröffentlichungstag und Bekanntmachung des Hinweises auf die Patenterteilung: **09.08.2023**
(21) Anmeldenummer: 19729711.2
(22) Anmeldetag: 05.06.2019
(51) Int. Cl.: B60W 50/14, B60W 50/00

(54) **VERFAHREN UND VORRICHTUNG ZUR UNTERSTÜTZUNG EINER AUFMERKSAMKEIT UND/ODER FAHRBEREITSCHAFT EINES FAHRERS BEI EINEM AUTOMATISIERTEN FAHRVORGANG EINES FAHRZEUGS**
METHOD AND DEVICE FOR ASSISTING THE ATTENTION AND/OR DRIVING READINESS OF A DRIVER DURING AN AUTOMATED DRIVING OPERATION OF A VEHICLE
PROCÉDÉ ET DISPOSITIF D'AIDE À L'ATTENTION ET/OU À L'ÉTAT DE PRÉPARATION À LA CONDUITE D'UN CONDUCTEUR LORS D'UNE OPÉRATION DE CONDUITE AUTOMATIQUE D'UN VEHICULE

(30) Priorität: 24.07.2018 DE 102018212286
(43) Veröffentlichungstag der Anmeldung: 02.06.2021
(73) Patentinhaber: Robert Bosch GmbH, 70442 Stuttgart (DE)
(72) Erfinder: BIEG, Hans-Joachim, 71093 Weil Im Schoenbuch (DE)
(86) Internationale Anmeldenummer: PCT/EP2019/064667
(87) Internationale Veröffentlichungsnummer: WO 2020/020526

(56) Entgegenhaltungen:
- EP-A1- 3 128 498
- DE-A1-102012 112 802
- US-A1- 2017 261 982
- US-B1- 9 823 657

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Automatisiert fahrende Fahrzeuge können den Fahrer zumindest teilweise von seiner Fahraufgabe entbinden. Während der automatisierten Fahrt des Fahrzeugs entsteht so Freiraum für Nebenaufgaben. Dennoch können bei einer automatisierten Fahrt Situationen auftreten, bei denen die Wahrscheinlichkeit eines Fahrfehlers, beispielsweise aufgrund von Baustellenmarkierungen oder eines Komplettausfalls der Automatisierung, beispielsweise aufgrund starken Regens und/oder Schnees, besonders erhöht ist. Zur sicheren Durchfahrung solcher Situationen kann der Fahrer vom System angehalten sein die Fahraufgabe zu übernehmen.

Das Dokument US 2017/261982 A1 offenbart ein autonomes Fahrsteuersystem für ein Fahrzeug.

### Offenbarung der Erfindung

Vor diesem Hintergrund werden mit dem hier vorgestellten Ansatz ein Verfahren zur Unterstützung einer Aufmerksamkeit und/oder Fahrbereitschaft eines Fahrers bei einem automatisierten Fahrvorgang eines Fahrzeugs, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Ansatz beruht auf der Tatsache, dass angesichts einer Fehler- und/oder Ausfallwahrscheinlichkeit zumindest eines Fahrzeugsensors zur Ausführung eines automatisierten Fahrvorgangs eines Fahrzeugs, ein Fahrer des Fahrzeugs dabei unterstützt wird, der Fahraufgabe die nötige Aufmerksamkeit zu widmen und Fahrbereitschaft zu zeigen. Somit ermöglicht der hier vorgestellte Ansatz einen fließenden Übergang zwischen einer Beschäftigung des Fahrers mit einer Nebenaufgabe und einer kompletten Übernahme der Fahraufgabe. Störende Unterbrechungen der Nebenaufgabe werden so abgeschwächt. Dies führt zu einer Steigerung der Fahrzufriedenheit bei gleichzeitig sicherer Fahrt des Fahrzeugs.

Es wird ein Verfahren zur Unterstützung einer Aufmerksamkeit und/oder Fahrbereitschaft eines Fahrers bei einem automatisierten Fahrvorgang eines Fahrzeugs vorgestellt, wobei das Verfahren die folgenden Schritte aufweist:
Berechnen eines Ausfallwahrscheinlichkeitswertes unter Verwendung zumindest eines eingelesenen Karteninformationssignals, Umweltbedingungssignals und/oder Wahrscheinlichkeitssignals, wobei der Ausfallwahrscheinlichkeitswert eine Ausfallwahrscheinlichkeit eines Fahrerassistenzsystems zur Ausführung eines automatisierten Fahrvorgangs repräsentiert, wobei das Karteninformationssignal eine Straßentopographie und/oder Konfidenztopographie auf einer von dem Fahrzeug befahrenen Fahrtroute repräsentiert, das Umweltbedingungssignal einen Witterungszustand in einer Umgebung des Fahrzeugs repräsentiert und das Wahrscheinlichkeitssignal eine Fehler- und/oder Ausfallwahrscheinlichkeit zumindest eines Fahrzeugsensors des Fahrerassistenzsystems repräsentiert;
Bestimmen eines Vergleichsparameters ansprechend auf den berechneten Ausfallwahrscheinlichkeitswert, wobei der Vergleichsparameter ein Vergleichsergebnis eines Grads einer erforderlichen Fahranforderung auf der befahrenen Fahrtroute des Fahrzeugs mit einem Grad einer aktuellen Aufmerksamkeit des Fahrers repräsentiert; und
Bereitstellen eines Vorwarnungssignals ansprechend auf den bestimmten Vergleichsparameter, wobei das Vorwarnungssignal eine Vorwarnung zur aktiven Übernahme einer Fahrzeugführung durch den Fahrer des Fahrzeugs repräsentiert.

Bei einem Fahrzeug kann es sich um ein Fahrzeug zur Personenbeförderung, beispielsweise ein hochautomatisiert fahrendes Fahrzeug, handeln. Unter einem Fahrzeug kann ferner ein Nutzfahrzeug zur Beförderung von Personen und/oder Gütern verstanden werden, beispielsweise ein hochautomatisiert fahrender Lkw oder Omnibus. Bei einem Fahrzeugfahrer kann es sich um jene Person handeln, die ein Fahrzeug unmittelbar lenkt oder steuert. Darüber hinaus kann auch diejenige Person als Fahrzeugfahrer gelten, die ein Fahrzeug in anderer verantwortlicher Weise, also mittelbar führt. Unter einem automatisierten Fahrvorgang kann eine Fahrmodus-spezifische Ausführung aller Aspekte der dynamischen Fahraufgabe durch ein automatisiertes Fahrsystem verstanden werden. Hierbei kann beispielsweise die Erwartung bestehen, dass der menschliche Fahrer eines Fahrzeugs auf Anfrage des Systems angemessen reagieren wird, um so beispielsweise bei schlechten Witterungebedingungen eine Fahraufgabe zu übernehmen. Automatisierter Fahrvorgänge können hierbei mit Fahrzeugen assoziiert werden, die sich ähnlich wie Flugzeuge im Autopilotmodus verhalten, also Lenk-, Blink-, Beschleunigungs- und Bremsmanöver längs- und quer der Fahrspur ohne menschliches Eingreifen durchführen. Dabei bezieht das Fahrzeug seine Eingangsdaten zunächst aus visuellen Informationsquellen, die auch dem Fahrer zur Verfügung stehen. In Vorstufen automatisierter Fahrvorgänge kann die menschliche Wahrnehmung durch die Bereitstellung von Informationen, die eine sichere Entscheidungsfindung und schnelle Reaktion des Fahrers ermöglichen, unterstützt werden. Erfolgt die Reaktion des Fahrzeugs allerdings selbständig über Algorithmen und daran geknüpfte Reaktionen des Fahrzeugs ohne die aktive Einwirkung des Fahrers, kann von einem automatisierten Fahrvorgang gesprochen werden. Das System kann hierbei seine Grenzen selbst erkennen und in diesem Fall die Übernahme durch den Fahrer rechtzeitig anfordern. Fahrfremde Tätigkeiten des Fahrers sind demnach begrenzt möglich.

Bei der Berechnung der Ausfallwahrscheinlichkeit des automatisierten Fahrvorgangs des Fahrzeugs kann das Karteninformationssignal insbesondere eine Straßentopographie und/oder Konfidenztopographie auf einer von dem Fahrzeug befahrenen Fahrtroute repräsentieren. Hierbei kann die Straßentopographie beispielsweise eine reduzierte Vorausschau von einer Video- und Radarsensorik des Fahrzeugs bei entsprechenden Kurvenradien und/oder Steigungen der befahrenen Fahrtroute repräsentieren. Darüber hinaus kann die Straßentopographie eine reduzierte Vorausschau und/oder Einsicht der Video- und Radarsensorik des Fahrzeugs bei Blockierungen durch Geländestrukturen und/oder Gebäude neben der Straße repräsentieren. Die Konfidenztopographie hingegen kann beispielsweise die in einer Karte verzeichneten Ausfallereignisse und daraus ermittelte Ausfallwahrscheinlichkeiten repräsentieren, die während einer Fahrt mit Fahrzeugen mit vergleichbarer Sensorik an den Hersteller zurückgemeldet wurden.

Bei der Berechnung der Ausfallwahrscheinlichkeit des automatisierten Fahrvorgangs des Fahrzeugs kann das Umweltbedingungssignal insbesondere einen Witterungszustand in einer Umgebung des Fahrzeugs repräsentieren. Hierbei kann es sich bei einem Witterungszustand beispielsweise um eine bekannte Beeinträchtigung einer Fahrzeugsensorik aufgrund von Wetterphänomenen, wie beispielsweise Regen, Schnee und/oder Sturm, handeln.

Bei der Berechnung der Ausfallwahrscheinlichkeit des automatisierten Fahrvorgangs des Fahrzeugs kann das Wahrscheinlichkeitssignal insbesondere eine Fehler- und/oder Ausfallwahrscheinlichkeit zumindest eines Fahrzeugsensors des Fahrerassistenzsystems repräsentieren. So kann das Wahrscheinlichkeitssignal beispielsweise eine sensorimmanente Ausfallwahrscheinlichkeit, beispielsweise ein im Sensor verbauter Selbsttest und/oder einen Ausfall von redundanten Sensoren, repräsentieren. Darüber hinaus kann das Wahrscheinlichkeitssignal beispielsweise eine perzeptionsbasierte Ausfallwahrscheinlichkeit, beispielsweise ein längerer, mehrfacher oder nicht plausibler Ausfall und/oder Fehler bei der Wahrnehmung von steuerungsrelevanten Merkmalen, wie beispielsweise einer Spur, eines Randsteins und/oder eines Vorderfahrzeugs, durch einen Sensor repräsentieren. Die Vorteile des hier vorgestellten Ansatzes zur Unterstützung einer Aufmerksamkeit und/oder Fahrbereitschaft eines Fahrers bei einem automatisierten Fahrvorgang eines Fahrzeugs liegen insbesondere darin, dass eine Ausfallwahrscheinlichkeit eines Fahrerassistenzsystems zur Ausführung des automatisierten Fahrvorgangs berechnet werden kann. So kann im Folgenden unter Verwendung der berechneten Ausfallwahrscheinlichkeit einem Fahrer des Fahrzeugs eine entsprechende Anweisung über eine nötige Aufmerksamkeit zur Überwachung der Fahrfunktion und zur Vorbereitung der eventuellen Übernahme der Fahraufgabe erteilt werden. Darüber hinaus wird mittels des hier vorgestellten Ansatzes eine Aufmerksamkeit und ein Fahrverhalten des Fahrers hinsichtlich der erteilten Aufmerksamkeitsanweisung überwacht und es werden dementsprechend Schritte eingeleitet, um eine Verkehrssicherheit zu erhöhen. Somit kann durch den hier vorgestellten Ansatz vorteilhaft eine fehlende Akzeptanz für "entmündigende" Fahrassistenzsysteme bei potenziellen Käufern solcher Fahrzeuge erhöht werden.

Gemäß einer Ausführungsform kann im Schritt des Bestimmens des Vergleichsparameters der Grad einer erforderlichen Fahranforderung auf der befahrenen Fahrtroute des Fahrzeugs unter Verwendung des Karteninformationssignals und/oder des Umweltbedingungssignals bestimmt werden, insbesondere wobei eine erforderliche Fahranforderung ein auszuführendes Fahrmanöver bei einer angenommenen Übernahme der Fahraufgabe durch den Fahrer repräsentiert. Das Karteninformationssignal repräsentiert hierbei beispielsweise eine Straßentopographie und/oder Konfidenztopographie auf einer von dem Fahrzeug befahrenen Fahrtroute. So kann mittels der Straßentopographie eine Information zu einer reduzierten Vorausschau einer Video- und/oder Radarsensorik des Fahrzeugs bei entsprechenden Kurvenradien und/oder Steigungen auf der von dem Fahrzeug befahrenen Fahrtroute ermittelt werden. Weiterhin kann mittels der Straßentopgraphie beispielsweise eine Information zu einer reduzierten Vorausschau und/oder Einsicht einer Video- und/oder Radarsensorik des Fahrzeugs beispielsweise auch bei Blockierungen durch Gebäude und/oder andere verdeckende Objekte oder Strukturen neben der Fahrbahn ermittelt werden. Die Konfidenztopographie kann beispielsweise die in einer Karte verzeichneten Ausfallereignisse und daraus ermittelte Ausfallwahrscheinlichkeit von Fahrzeugsensoren aufzeigen, die während einer Fahrt mit Fahrzeugen mit vergleichbarer Sensorik an den Hersteller zurückgemeldet wurden. Eine solche Ausführungsform des hier vorgestellten Ansatzes bieten somit den Vorteil, dass bestimmt werden kann, ob vom Fahrer entsprechende Fahrmanöver erforderlich sind, um Gefährdungen, beispielsweise bei einer Übernahme der Fahraufgabe in einer Kurve, zu vermeiden. Hierdurch kann das Fahrzeug beispielsweise nicht nur eine Übergabe der Fahrzeugführung an den Fahrer planen, die sicher und unfallfrei durchführbar ist, sondern ebenso eine potenziell kritische Verkehrssituation früher erkennen und vermeiden.

Gemäß einer weiteren Ausführungsform kann im Schritt des Bestimmens des Vergleichsparameters der Grad einer aktuellen Aufmerksamkeit des Fahrers unter Verwendung eines Aufmerksamkeitssignals eines Innenraumsensors des Fahrzeugs bestimmt werden, wobei das Aufmerksamkeitssignal eine aktuelle Blickrichtung des Fahrers und/oder eine Kopfposition des Fahrers und/oder eine Sitzposition des Fahrers und/oder eine Handposition des Fahrers repräsentiert. Bei dem hier vorgestellten Ansatz kann beispielsweise unter Verwendung eines Nachführsystems, wie einem videobasierten Eye-Tracker, eine Messung der momentanen Blickrichtung und/oder einem Blickwinkel sowie einer Kopfposition und/oder Kopforientierung des Fahrers erfolgen. Ferner kann zusätzlich eine Überwachung der Körperpose des Fahrers, insbesondere dessen Handbelegung und Handstellung, mittels Video- oder 3D-Sensorik erfolgen. Eine solche Ausführungsform des hier vorgestellten Ansatzes bieten somit den Vorteil, dass ein aktueller Grad einer Aufmerksamkeit und/oder Fahrtüchtigkeit des Fahrers mittels einer Fahrzeuginnenraumsensorik bestimmt werden kann, sodass das Fahrzeug den Fahrer zeitnah und allumfassend vorwarnen kann, dass eine eventuelle Übergabe der Fahraufgabe an den Fahrer bevorsteht.

Weiterhin weist das Verfahren einen Schritt des Überprüfens auf, bei dem gemäß der Erfindung ein Fahrverhalten des Fahrers ansprechend auf das bereitgestellte Vorwarnungssignal unter Verwendung des Aufmerksamkeitssignals überprüft wird, wobei der automatisierte Fahrvorgang abgeschaltet und eine kontrollierte Übergabe der Fahraufgabe an den Fahrer veranlasst wird, wenn der Fahrer die Vorwarnung zur aktiven Übernahme einer Fahrzeugführung ignoriert. Der hier vorgestellte Ansatz bietet den Vorteil, dass unter Verwendung des Vorwarnsignals eine Aufforderung an den Fahrer erfolgt, die Straße im Blick zu halten und/oder das Lenkrad zu ergreifen, wobei eine kontrollierte Übergabe der Fahraufgabe an den Fahrers sowie eine Abschaltung des automatisierten Fahrvorgangs erfolgt, wenn der Fahrer der Aufforderung keine Folge leistet. Somit kann das Fahrzeug beispielsweise eine sichere, unfallfreie und komfortable Übergabe der Fahrzeugführung an den Fahrer planen und ebenso eine potenziell kritische Verkehrssituation früher erkannt und vermieden werden.

Gemäß einer Ausführungsform kann hierbei im Schritt des Überprüfens der automatisierte Fahrvorgang abgeschaltet und/oder eine kontrollierte Übergabe der Fahraufgabe an den Fahrer nach Ablauf eines vorbestimmten Zeitfensters veranlasst werden, insbesondere wobei das Zeitfenster beispielsweise höchstens 3 Sekunden beträgt. Solange es zu kritischen Situationen, wie beispielsweise einem Sensorausfall und/oder schlechten Witterungsbedingungen kommen kann, die nicht durch das Fahrassistenzsystem selbst lösbar sind, sollte der Fahrer die Fahraufgabe rechtzeitig und komfortabel übernehmen können. Hierbei kann die Annahme zu Grunde gelegt werden, dass sich ein Fahrer beim Fahren in hohen Automationszuständen mit Nebenaufgaben beschäftigt, was für die Gestaltung eines Übergabevorgangs betrachten werden sollte. Die dann für eine Übergabe benötigte Zeit kann, abhängig von einer zu bewältigenden Fahrsituation und eines aktuellen Fahrerzustandes, unterschiedlich lang sein. Die notwendige Übergabezeit kann unter anderem beispielsweise davon abhängen, wie lange der Fahrer braucht, sein Umfeld vollständig über Blicke zu erfassen, ein angemessenes Situationsbewusstsein zu erlangen und die Regelung des Fahrzeugs vom System zu übernehmen. Dabei kann insbesondere eine Komplexität der Fahrsituation eine Rolle spielen. Eine solche Ausführungsform des hier vorgestellten Ansatzes bietet somit den Vorteil, dass stets eine Übernahmezeit angestrebt wird, in der die Fahraufgabe erfolgreich übernommen werden kann und darüber hinaus die Übernahme als komfortabel wahrgenommen wird, ohne, dass es zu einer Beeinträchtigung der allgemeinen Verkehrssicherheit kommt.

Ferner kann gemäß einer Ausführungsform im Schritt des Bestimmens der Vergleichsparameter bestimmt werden, wenn der berechnete Ausfallwahrscheinlichkeitswert eines Fahrerassistenzsystems zur Ausführung eines automatisierten Fahrvorgangs bei zumindest 50 Prozent liegt, insbesondere wobei im Schritt des Bereitstellens das Vorwarnungssignal bereitgestellt wird, wenn der bestimmte Vergleichsparameter eine Diskrepanz zwischen dem Grad einer erforderlichen Fahranforderung auf der befahrenen Fahrtroute des Fahrzeugs und dem Grad einer aktuellen Aufmerksamkeit des Fahrers repräsentiert. Eine solche Ausführungsform des hier vorgestellten Ansatzes bietet somit insbesondere den Vorteil, dass eine potenziell kritische Verkehrssituation früher erkannt und vermieden werden kann, wodurch eine allgemeine Verkehrssicherheit erhöht wird.

Gemäß einer Ausführungsform kann im Schritt des Bereitstellens das Vorwarnungssignal akustisch, optisch und/oder haptisch ausgegeben werden. So kann eine akustische Vorwarnung des Fahrers beispielsweise unter Verwendung einer in dem Fahrzeug verbauten Lautsprechanlage erfolgen, wobei die akustische Vorwarnung sich insbesondere durch eine hohe Tonlage und Lautstärke auszeichnen sollte. Eine optische Vorwarnung des Fahrers kann beispielsweise über eine Anzeigeeinrichtung des Fahrzeugs, beispielsweise einen Bordcomputer und/oder ein Head-up Display, erfolgen. So ist ferner vorstellbar, dass eine optische Vorwarnung ebenso unter Verwendung einer Lichtausstrahlung im Fahrzeuginnenraum, wobei beispielsweise eine Lichtfarbe wechselt und/oder das Licht blinkt, erfolgen kann, was insbesondere bei Nachtfahrten des Fahrzeugs vorteilhaft wäre. Eine haptische Vorwarnung des Fahrers kann beispielsweise mittels einer vibrierenden Sitzeinrichtung, auf der der Fahrer des Fahrzeugs sitzt oder liegt, erfolgen. Eine solche Ausführungsform des hier vorgestellten Ansatzes bietet somit den Vorteil, dass ein Fahrer des Fahrzeugs entsprechend seines Zustands bestmöglich vorgewarnt werden kann, dass eine eventuelle Übergabe der Fahrzeugführung bevorsteht.

Weiterhin kann gemäß einer Ausführungsform im Schritt des Bereitstellens ein Warnsignal an eine fahrzeugexterne Recheneinheit und/oder über eine Fahrzeug-zu-Fahrzeug-Kommunikationsschnittstelle an weitere Fahrzeuge, die sich in dem Umfeld des Fahrzeugs befinden, bereitgestellt werden, wobei das Warnsignal eine Warnung über eine Ausfallwahrscheinlichkeit eines Fahrerassistenzsystems zur Ausführung eines automatisierten Fahrvorgangs und/oder ein Abschalten eines automatisierten Fahrvorgangs des Fahrzeugs repräsentiert. Eine solche Ausführungsform des hier vorgestellten Ansatzes bietet den Vorteil, dass eine Warnung bzw. eine Information zu einem Ausfall eines Fahrerassistenzsystems eines Fahrzeugs und/oder zu einer Übergabe einer Fahraufgabe an einen Fahrer des Fahrzeugs schnell, einfach und effektiv geteilt werden kann, sodass die sich in einem Umfeld des Fahrzeugs befindlichen Fahrzeuge darauf vorbereiten können, langsam und vorausschauend zu fahren sowie auf besagtes Fahrzeug zu achten, falls sich eine Übergabe der Fahraufgabe an den Fahrer wider Erwarten als schwierig gestaltet. Hierdurch kann eine Verkehrssicherheit erhöht werden.

Schließlich kann gemäß einer Ausführungsform der Schritt des Berechnens und/oder der Schritt des Bestimmens und/oder der Schritt des Bereitstellens auf einer fahrzeugexternen Recheneinheit und/oder auf einer im Fahrzeug verbauten Recheneinheit ausgeführt werden, insbesondere wobei der Schritt des Berechnens und/oder der Schritt des Bestimmens wiederholt ausgeführt wird. Eine solche Ausführungsform des hier vorgestellten Ansatzes auf einer fahrzeugexternen Recheneinheit bietet somit den Vorteil, dass eine Aufbereitung von Daten in einer fahrzeugexternen Recheneinheit einen geringeren Rechenbedarf im Fahrzeug selbst bedeutet und einen damit verbundenen geringeren Energieverbrauch oder die Möglichkeit, Ressourcen für andere Funktionen zu nutzen, ermöglicht. Außerdem verfügt die externe Recheneinheit über eine größere verfügbare Rechenleistung als ein fahrzeuginterner Computer.

Das hier vorgestellte Verfahren zur Unterstützung einer Aufmerksamkeit und/oder Fahrbereitschaft eines Fahrers bei einem automatisierten Fahrvorgang eines Fahrzeugs kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens zur Unterstützung einer Aufmerksamkeit und/oder Fahrbereitschaft eines Fahrers bei einem automatisierten Fahrvorgang eines Fahrzeugs in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 ein Blockschaltbild einer Vorrichtung zur Unterstützung einer Aufmerksamkeit und/oder Fahrbereitschaft eines Fahrers bei einem automatisierten Fahrvorgang eines Fahrzeugs gemäß einem Ausführungsbeispiel; und
Fig. 2 ein Ablaufdiagramm eines Ausführungsbeispiels eines Verfahrens zur Unterstützung einer Aufmerksamkeit und/oder Fahrbereitschaft eines Fahrers bei einem automatisierten Fahrvorgang eines Fahrzeugs gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

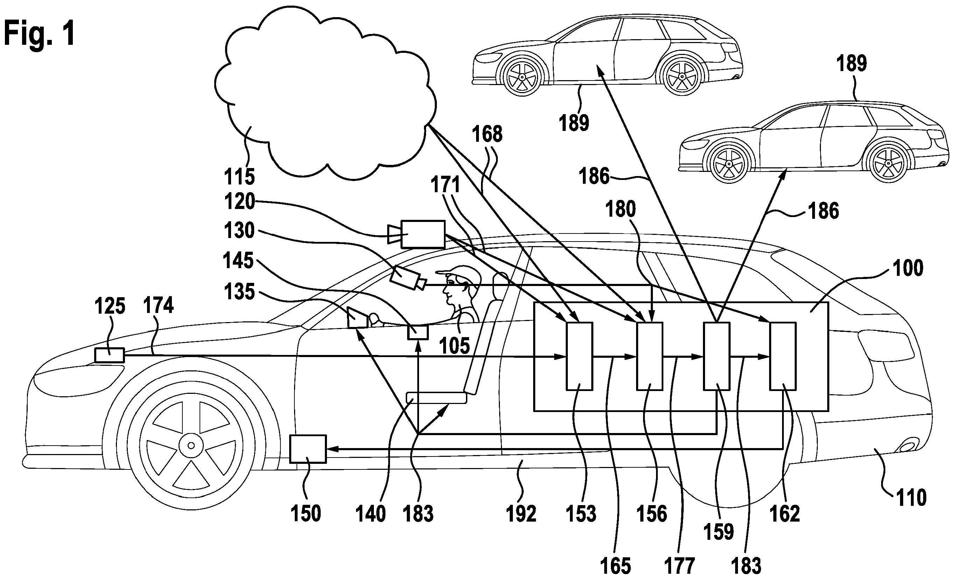

Fig. 1 zeigt ein Blockschaltbild einer Vorrichtung 100 zur Unterstützung einer Aufmerksamkeit und/oder Fahrbereitschaft eines Fahrers 105 bei einem automatisierten Fahrvorgang eines Fahrzeugs 110 gemäß einem Ausführungsbeispiel. Hierbei ist die Vorrichtung 100 beispielhaft auf dem Fahrzeug 110 angeordnet. Zusätzlich oder alternativ kann die Vorrichtung 100 auch auf einer fahrzeugexternen Recheneinheit 115, beispielsweise einer Cloud, angeordnet sein. Das Fahrzeug 110 weist gemäß einem Ausführungsbeispiel eine Kameraeinheit 120 zur optisch-sensorischen Erfassung eines Umfelds des Fahrzeugs 110, zumindest einen Umfeldsensor 125 zur sensorischen Erfassung des Umfelds des Fahrzeugs 110, einen Überwachungssensor 130, beispielhaft eine Überwachungskameraeinheit 130 zur Überwachung eines Fahrzeuginnenraums, eine Anzeigeeinheit 135 zur optischen Anzeige von Informationen, eine Sitzeinrichtung 140 zum Sitzen des Fahrers 105 in dem Fahrzeug 110, eine Lautsprechereinrichtung 145 zur Ausgabe akustischer Informationen sowie eine Steuereinheit 150 zur Quer- und Längsführung des Fahrzeugs 110 auf.

Gemäß einem Ausführungsbeispiel weist die Vorrichtung 100 eine Berechnungseinrichtung 153, eine Bestimmungseinrichtung 156, eine Bereitstelleinrichtung 159 sowie eine Überprüfungseinrichtung 162 auf. Die Berechnungseinrichtung 153 ist gemäß einem Ausführungsbeispiel ausgebildet, einen Ausfallwahrscheinlichkeitswert 165 unter Verwendung zumindest eines eingelesenen Karteninformationssignals 168, Umweltbedingungssignals 171 und/oder Wahrscheinlichkeitssignals 174 zu berechnen, wobei der Ausfallwahrscheinlichkeitswert 165 eine Ausfallwahrscheinlichkeit eines Fahrerassistenzsystems zur Ausführung eines automatisierten Fahrvorgangs des Fahrzeugs 110 repräsentiert. Hierbei wird das Karteninformationssignal 168, das eine Straßentopographie und/oder Konfidenztopographie auf einer von dem Fahrzeug 110 befahrenen Fahrtroute repräsentiert, beispielhaft von der externen Recheneinheit 115 an die Berechnungseinrichtung 153 bereitgestellt. Zusätzlich oder alternativ kann das Karteninformationssignal 168 aber auch von einer auf einem fahrzeuginternen Speicher hinterlegten Karte an die Berechnungseinrichtung 153 bereitgestellt werden. Das Umweltbedingungssignal 171, das einen Witterungszustand in einer Umgebung des Fahrzeugs 110 repräsentiert, wird beispielhaft von der Kameraeinheit 120 des Fahrzeugs 110 an die Berechnungseinrichtung 153 bereitgestellt. Zusätzlich oder alternativ kann das Umweltbedingungssignal 171 ebenfalls von der fahrzeugexternen Recheneinheit 115 und/oder dem zumindest einen Umfeldsensor 125 des Fahrzeugs 110 an die Berechnungseinrichtung 153 bereitgestellt werden. Das Wahrscheinlichkeitssignal 174, das eine Fehler- und/oder Ausfallwahrscheinlichkeit zumindest eines Fahrzeugsensors des Fahrerassistenzsystems repräsentiert, wird beispielhaft von dem Umfeldsensor 125 des Fahrzeugs 110 an die Berechnungseinrichtung 153 bereitgestellt. Zusätzlich oder alternativ kann das Wahrscheinlichkeitssignal 174 ebenso von der Steuereinheit 150 des Fahrzeugs 110 an die Berechnungseinrichtung 153 bereitgestellt werden.

Die Bestimmungseinrichtung 156 ist gemäß einem Ausführungsbeispiel ausgebildet, einen Vergleichsparameter 177 ansprechend auf den von der Berechnungseinrichtung 153 berechneten Ausfallwahrscheinlichkeitswert 165 zu bestimmen, wobei der Vergleichsparameter 177 ein Vergleichsergebnis eines Grads einer erforderlichen Fahranforderung auf der befahrenen Fahrtroute des Fahrzeugs 110 mit einem Grad einer aktuellen Aufmerksamkeit des Fahrers 105 repräsentiert. Hierbei ist die Bestimmungseinrichtung 156 ausgebildet, den Grad einer erforderlichen Fahranforderung auf der befahrenen Fahrtroute des Fahrzeugs 110 zur Bestimmung des Vergleichsparameters 177 unter Verwendung des von der fahrzeugexternen Recheneinheit 115 bereitgestellten Karteninformationssignals 168 und/oder des von der Kameraeinheit 120 des Fahrzeugs 110 bereitgestellten Umweltbedingungssignals 171 zu bestimmen. Die Bestimmeinrichtung 156 ist zudem ferner ausgebildet den Grad einer aktuellen Aufmerksamkeit des Fahrers 105 zur Bestimmung des Vergleichsparameters 177 unter Verwendung eines von der Überwachungskameraeinheit 130 des Fahrzeuginnenraums bereitgestellten Aufmerksamkeitssignals 180 zu bestimmen, wobei das Aufmerksamkeitssignal 180 eine aktuelle Blickrichtung des Fahrers 105 und/oder eine Kopfposition des Fahrers 105 und/oder eine Sitzposition des Fahrers 105 und/oder eine Handposition des Fahrers 105 repräsentiert.

Die Bereitstelleinrichtung 159 ist gemäß einem Ausführungsbeispiel ausgebildet ein Vorwarnungssignal 183 ansprechend auf den zuvor bestimmten Vergleichsparameter 177 bereitzustellen, wobei das Vorwarnungssignal 183 eine Vorwarnung zur aktiven Übernahme einer Fahrzeugführung durch den Fahrer 105 des Fahrzeugs 110 repräsentiert. Hierbei wird das Vorwarnungssignal 183 akustisch, optisch und/oder haptisch ausgegeben, wobei eine akustische Ausgabe beispielhaft an die Lautsprechereinrichtung 145 des Fahrzeugs 110, die optische Ausgabe beispielhaft an die Anzeigeeinrichtung 135 des Fahrzeugs 110 und die haptische Ausgabe beispielhaft an die Sitzeinrichtung 140 des Fahrzeugs 110 erfolgt. Die Bereitstelleinrichtung 159 ist gemäß einem Ausführungsbeispiel ferner ausgebildet ein Warnsignal 186 über eine Fahrzeug-zu-Fahrzeug-Kommunikationsschnittstelle an weitere Fahrzeuge 189, die sich in dem Umfeld des Fahrzeugs 110 befinden, bereitzustellen. Zusätzlich oder alternativ kann das Warnsignal 186 ebenfalls an die fahrzeugexterne Recheneinheit 115 bereitgestellt werden. Hierbei repräsentiert das Warnsignal 186 eine Warnung über eine Ausfallwahrscheinlichkeit eines Fahrerassistenzsystems zur Ausführung eines automatisierten Fahrvorgangs und/oder ein Abschalten eines automatisierten Fahrvorgangs des Fahrzeugs 110.

Die Überprüfungseinrichtung 162 ist gemäß der Erfindung ausgebildet, ein Fahrverhalten des Fahrers 105 ansprechend auf das bereitgestellte Vorwarnungssignal 183 unter Verwendung des Aufmerksamkeitssignals 180 zu überprüfen, wobei der automatisierte Fahrvorgang abgeschaltet und eine kontrollierte Übergabe der Fahraufgabe an den Fahrer 105 des Fahrzeugs 110 veranlasst wird, wenn der Fahrer 105 die Vorwarnung zur aktiven Übernahme einer Fahrzeugführung ignoriert. Hierbei ist die Überprüfungseinrichtung ferner ausgebildet, ein Abschaltsignal 192 an die Steuereinheit 150 des Fahrzeugs 110 bereitzustellen, wobei unter Verwendung des Abschaltsignals 192 der automatisierte Fahrvorgang und eine kontrollierte Übergabe der Fahraufgabe an den Fahrer 105 nach Ablauf eines vorbestimmten Zeitfensters abgeschaltet bzw. veranlasst wird, wobei das Zeitfenster beispielhaft höchstens 3 Sekunden beträgt.

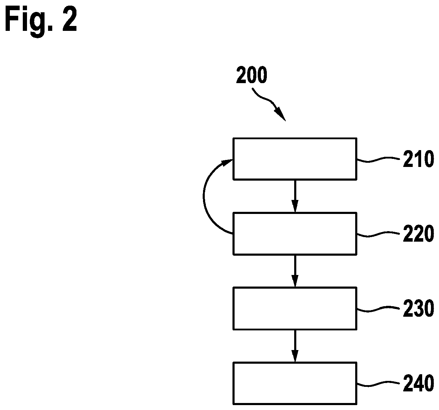

Fig. 2 zeigt ein Ablaufdiagramm eines Ausführungsbeispiels eines Verfahrens 200 zur Unterstützung einer Aufmerksamkeit und/oder Fahrbereitschaft eines Fahrers bei einem automatisierten Fahrvorgang eines Fahrzeugs gemäß einem Ausführungsbeispiel. Hierbei kann das Verfahren 200 beispielhaft auf der Vorrichtung zur Unterstützung einer Aufmerksamkeit und/oder Fahrbereitschaft eines Fahrers bei einem automatisierten Fahrvorgang eines Fahrzeugs aus Fig. 1 ausgeführt werden.

Das Verfahren 200 weist zunächst einen Schritt 210 auf, bei dem ein Ausfallwahrscheinlichkeitswert unter Verwendung zumindest eines eingelesenen Karteninformationssignals, Umweltbedingungssignals und/oder Wahrscheinlichkeitssignals berechnet wird. Hierbei repräsentiert der Ausfallwahrscheinlichkeitswert eine Ausfallwahrscheinlichkeit eines Fahrerassistenzsystems zur Ausführung eines automatisierten Fahrvorgangs, wobei das Karteninformationssignal eine Straßentopographie und/oder Konfidenztopographie auf einer von dem Fahrzeug befahrenen Fahrtroute, das Umweltbedingungssignal einen Witterungszustand in einer Umgebung des Fahrzeugs und das Wahrscheinlichkeitssignal eine Fehler- und/oder Ausfallwahrscheinlichkeit zumindest eines Fahrzeugsensors des Fahrerassistenzsystems repräsentiert. Anschließend weist das Verfahren 200 einen Schritt 220 auf, bei dem ein Vergleichsparameter ansprechend auf den berechneten Ausfallwahrscheinlichkeitswert bestimmt wird, wobei der Vergleichsparameter ein Vergleichsergebnis eines Grads einer erforderlichen Fahranforderung auf der befahrenen Fahrtroute des Fahrzeugs mit einem Grad einer aktuellen Aufmerksamkeit des Fahrers repräsentiert. Das Verfahren 200 weist ferner einen Schritt 230 auf, bei dem ein Vorwarnungssignal ansprechend auf den bestimmten Vergleichsparameter bereitgestellt wird, wobei das Vorwarnungssignal eine Vorwarnung zur aktiven Übernahme einer Fahrzeugführung durch den Fahrer des Fahrzeugs repräsentiert. Schließlich weist das Verfahren 200 einen Schritt 240 auf, bei dem ein Fahrverhalten des Fahrers ansprechend auf das bereitgestellte Vorwarnungssignal unter Verwendung des Aufmerksamkeitssignals überprüft wird, wobei der automatisierte Fahrvorgang abgeschaltet und eine kontrollierte Übergabe der Fahraufgabe an den Fahrer veranlasst wird, wenn der Fahrer die Vorwarnung zur aktiven Übernahme einer Fahrzeugführung ignoriert.

Gemäß einer Ausführungsform wird der Schritt 210 und/oder der Schritt 220 wiederholt ausgeführt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zur Unterstützung einer Aufmerksamkeit und/oder Fahrbereitschaft eines Fahrers (105) bei einem automatisierten Fahrvorgang eines Fahrzeugs (110), wobei das Verfahren (200) die folgenden Schritte aufweist:
Berechnen (210) eines Ausfallwahrscheinlichkeitswertes (165) unter Verwendung zumindest eines eingelesenen Karteninformationssignals (168), Umweltbedingungssignals (171) und/oder Wahrscheinlichkeitssignals (174), wobei der Ausfallwahrscheinlichkeitswert (165) eine Ausfallwahrscheinlichkeit eines Fahrerassistenzsystems zur Ausführung eines automatisierten Fahrvorgangs repräsentiert, wobei das Karteninformationssignal (168) eine Straßentopographie und/oder Konfidenztopographie auf einer von dem Fahrzeug (110) befahrenen Fahrtroute repräsentiert, das Umweltbedingungssignal (171) einen Witterungszustand in einer Umgebung des Fahrzeugs (110) repräsentiert und das Wahrscheinlichkeitssignal (174) eine Fehler- und/oder Ausfallwahrscheinlichkeit zumindest eines Fahrzeugsensors (125) des Fahrerassistenzsystems repräsentiert;
Bestimmen (220) eines Vergleichsparameters (177) ansprechend auf den berechneten Ausfallwahrscheinlichkeitswert (165), wobei der Vergleichsparameter (177) ein Vergleichsergebnis eines Grads einer erforderlichen Fahranforderung auf der befahrenen Fahrtroute des Fahrzeugs (110) mit einem Grad einer aktuellen Aufmerksamkeit des Fahrers (105) repräsentiert; und
Bereitstellen (230) eines Vorwarnungssignals (183) ansprechend auf den bestimmten Vergleichsparameter (177), wobei das Vorwarnungssignal (183) eine Vorwarnung zur aktiven Übernahme einer Fahrzeugführung durch den Fahrer (105) des Fahrzeugs (110) repräsentiert
**gekennzeichnet durch**
einen Schritt (240) des Überprüfens eines Fahrverhaltens des Fahrers (105) ansprechend auf das bereitgestellte Vorwarnungssignal (183) unter Verwendung des Aufmerksamkeitssignals (180), wobei der automatisierte Fahrvorgang abgeschaltet und eine kontrollierte Übergabe der Fahraufgabe an den Fahrer (105) veranlasst wird, wenn der Fahrer (105) die Vorwarnung zur aktiven Übernahme einer Fahrzeugführung ignoriert.

2. Verfahren (200) gemäß Anspruch 1, bei dem im Schritt (220) des Bestimmens des Vergleichsparameters (177) der Grad einer erforderlichen Fahranforderung auf der befahrenen Fahrtroute des Fahrzeugs (110) unter Verwendung des Karteninformationssignals (168) und/oder des Umweltbedingungssignals (171) bestimmt wird, insbesondere wobei eine erforderliche Fahranforderung ein auszuführendes Fahrmanöver repräsentiert.

3. Verfahren (200) gemäß einem der vorangegangenen Ansprüche, bei dem im Schritt (220) des Bestimmens des Vergleichsparameters (177) der Grad einer aktuellen Aufmerksamkeit des Fahrers (105) unter Verwendung eines Aufmerksamkeitssignals (180) eines Innenraumsensors (130) des Fahrzeugs (110) bestimmt wird, wobei das Aufmerksamkeitssignal (180) eine aktuelle Blickrichtung des Fahrers (105) und/oder eine Kopfposition des Fahrers (105) und/oder eine Sitzposition des Fahrers (105) und/oder eine Handposition des Fahrers (105) repräsentiert.

4. Verfahren (200) gemäß einem der vorangegangenen Ansprüche, bei dem im Schritt (240) des Überprüfens der automatisierte Fahrvorgang abgeschaltet und/oder eine kontrollierte Übergabe der Fahraufgabe an den Fahrer (105) nach Ablauf eines vorbestimmten Zeitfensters veranlasst wird, insbesondere wobei das Zeitfenster höchstens 3 Sekunden beträgt.

5. Verfahren (200) gemäß einem der vorangegangenen Ansprüche, bei dem im Schritt (220) des Bestimmens der Vergleichsparameter (177) bestimmt wird, wenn der berechnete Ausfallwahrscheinlichkeitswert (165) eines Fahrerassistenzsystems zur Ausführung eines automatisierten Fahrvorgangs bei zumindest 50 Prozentliegt, insbesondere wobei im Schritt (230) des Bereitstellens das Vorwarnungssignal (183) bereitgestellt wird, wenn der bestimmte Vergleichsparameter (177) eine Diskrepanz zwischen dem Grad einer erforderlichen Fahranforderung auf der befahrenen Fahrtroute des Fahrzeugs (110) und dem Grad einer aktuellen Aufmerksamkeit des Fahrers (105) repräsentiert.

6. Verfahren (200) gemäß einem der vorangegangenen Ansprüche, bei dem im Schritt (230) des Bereitstellens das Vorwarnungssignal (183) akustisch, optisch und/oder haptisch ausgegeben wird.

7. Verfahren (200) gemäß einem der vorangegangenen Ansprüche, bei dem im Schritt (230) des Bereitstellens ein Warnsignal (186) an eine fahrzeugexterne Recheneinheit (115) und/oder über eine Fahrzeug-zu-Fahrzeug-Kommunikationsschnittstelle an weitere Fahrzeuge (189), die sich in dem Umfeld des Fahrzeugs (110) befinden, bereitgestellt wird, wobei das Warnsignal (186) eine Warnung über eine Ausfallwahrscheinlichkeit eines Fahrerassistenzsystems zur Ausführung eines automatisierten Fahrvorgangs und/oder ein Abschalten eines automatisierten Fahrvorgangs des Fahrzeugs (110) repräsentiert.

8. Verfahren (200) gemäß einem der vorangegangenen Ansprüche, bei dem der Schritt (210) des Berechnens und/oder der Schritt (220) des Bestimmens und/oder der Schritt (230) des Bereitstellens auf einer fahrzeugexternen Recheneinheit (115) und/oder auf einer im Fahrzeug (110) verbauten Recheneinheit ausgeführt wird, insbesondere wobei der Schritt (210) des Berechnens und/oder der Schritt (220) des Bestimmens wiederholt ausgeführt wird.

9. Vorrichtung (100), die eingerichtet ist, um die Schritte (210, 220, 230, 240) des Verfahrens (200) gemäß einem der vorangegangenen Ansprüche in entsprechenden Einheiten (153, 156, 159, 162) auszuführen und/oder anzusteuern.

10. Computerprogramm, das dazu eingerichtet ist, die Schritte (210, 220, 230, 240) des Verfahrens (200) gemäß einem der vorangegangenen Ansprüche in entsprechenden Einheiten (153, 156, 159, 162) auszuführen und/oder anzusteuern.

11. Maschinenlesbares Speichermedium, auf dem das Computerprogramm nach Anspruch 10 gespeichert ist.

## Claims

1. Method (200) for assisting an attentiveness and/or driving readiness of a driver (105) during an automated driving process of a vehicle (110), the method (200) comprising the following steps:
calculating (210) a failure probability value (165) using at least one read-in map information signal (168), environmental condition signal (171) and/or probability signal (174), the failure probability value (165) representing a failure probability of a driver assistance system for performing an automated driving process, the map information signal (168) representing a road topography and/or confidence topography on a travel route that is travelled by the vehicle (110), the environmental condition signal (171) representing a weather state in the surroundings of the vehicle (110), and the probability signal (174) representing a fault probability and/or failure probability of at least one vehicle sensor (125) of the driver assistance system;
determining (220) a comparison parameter (177) in response to the calculated failure probability value (165), the comparison parameter (177) representing a result of a comparison of a level of a necessary driving requirement on the travel route that is travelled by the vehicle (110) with a level of a current attentiveness of the driver (105); and
providing (230) an advance warning signal (183) in response to the comparison parameter (177) determined, the advance warning signal (183) representing an advance warning for vehicle control to be actively taken over by the driver (105) of the vehicle (110),
**characterized by**
a step (240) of checking a driving behaviour of the driver (105) in response to the provided advance warning signal (183) using the attentiveness signal (180), the automated driving process being switched off and a supervised transfer of the driving task to the driver (105) being instigated if the driver (105) ignores the advance warning for actively taking over vehicle control.

2. Method (200) according to Claim 1, wherein step (220) of determining the comparison parameter (177) involves determining the level of a necessary driving requirement on the travel route that is travelled by the vehicle (110) using the map information signal (168) and/or the environmental condition signal (171), in particular a necessary driving requirement representing a driving manoeuvre to be performed.

3. Method (200) according to either of the preceding claims, wherein step (220) of determining the comparison parameter (177) involves determining the level of a current attentiveness of the driver (105) using an attentiveness signal (180) of an interior sensor (130) of the vehicle (110), the attentiveness signal (180) representing a current viewing direction of the driver (105) and/or a head position of the driver (105) and/or a sitting position of the driver (105) and/or a hand position of the driver (105) .

4. Method (200) according to any of the preceding claims, wherein step (240) of checking involves switching off the automated driving process and/or instigating a supervised transfer of the driving task to the driver (105) after a predetermined time window has elapsed, in particular the time window being at most 3 seconds.

5. Method (200) according to any of the preceding claims, wherein step (220) of determining involves determining the comparison parameter (177) if the calculated failure probability value (165) of a driver assistance system for performing an automated driving process is at least 50 per cent, in particular step (230) of providing involving providing the advance warning signal (183) if the comparison parameter (177) determined represents a discrepancy between the level of a necessary driving requirement on the travel route that is travelled by the vehicle (110) and the level of a current attentiveness of the driver (105).

6. Method (200) according to any of the preceding claims, wherein step (230) of providing involves outputting the advance warning signal (183) acoustically, optically and/or haptically.

7. Method (200) according to any of the preceding claims, wherein step (230) of providing involves providing a warning signal (186) to a vehicle-external computing unit (115) and/or, via a vehicle-to-vehicle communication interface, to further vehicles (189) situated in the surroundings of the vehicle (110), the warning signal (186) representing a warning of a failure probability of a driver assistance system for performing an automated driving process and/or switching off of an automated driving process of the vehicle (110).

8. Method (200) according to any of the preceding claims, wherein step (210) of calculating and/or step (220) of determining and/or step (230) of providing are/is performed on a vehicle-external computing unit (115) and/or on a computing unit installed in the vehicle (110), in particular step (210) of calculating and/or step (220) of determining being performed repeatedly.

9. Device (100) configured to perform and/or to control steps (210, 220, 230, 240) of the method (200) according to any of the preceding claims in corresponding units (153, 156, 159, 162).

10. Computer program configured to perform and/or to control steps (210, 220, 230, 240) of the method (200) according to any of the preceding claims in corresponding units (153, 156, 159, 162).

11. Machine-readable storage medium on which the computer program according to Claim 10 is stored.

## Revendications

1. Procédé (200) pour assister une vigilance et/ou un état prêt à conduire d'un conducteur (105) lors d'une opération de conduite automatisée d'un véhicule (110), le procédé (200) comprenant les étapes suivantes :
calcul (210) d'une valeur de probabilité de défaillance (165) en utilisant au moins un signal d'informations cartographiques (168), un signal de conditions environnementales (171) et/ou un signal de probabilité (174) lu, la valeur de probabilité de défaillance (165) représentant une probabilité de défaillance d'un système d'assistance au conducteur à exécuter une opération de conduite automatisée, le signal d'informations cartographiques (168) représentant une topographie de la route et/ou une topographie de confiance sur un itinéraire de déplacement parcouru par le véhicule (110), le signal de conditions environnementales (171) représentant un état météorologique dans un environnement du véhicule (110) et le signal de probabilité (174) représentant une probabilité d'erreur et/ou de défaillance d'au moins un capteur de véhicule (125) du système d'assistance au conducteur ;
détermination (220) d'un paramètre de comparaison (177) en réponse à la valeur calculée de probabilité de défaillance (165), le paramètre de comparaison (177) représentant un résultat de comparaison d'un degré d'une exigence de conduite nécessaire sur l'itinéraire parcouru du véhicule (110) avec un degré d'une vigilance actuelle du conducteur (105) ; et
fourniture (230) d'un signal de préalerte (183) en réponse au paramètre de comparaison (177) déterminé, le signal de préalerte (183) représentant une préalerte visant à la reprise active d'un guidage du véhicule par le conducteur (105) du véhicule (110)
**caractérisé par**
une étape (240) de la vérification d'un comportement de conduite du conducteur (105) en réponse au signal de préalerte (183) fourni en utilisant le signal de vigilance (180), l'opération de conduite automatisée étant désactivée et un transfert contrôlé de la tâche de conduite au conducteur (105) étant provoqué lorsque le conducteur (105) ignore la préalerte visant à la reprise active d'un guidage du véhicule.

2. Procédé (200) selon la revendication 1, dans lequel, à l'étape (220) de détermination du paramètre de comparaison (177), le degré d'une exigence de conduite nécessaire sur l'itinéraire parcouru du véhicule (110) est déterminé en utilisant le signal d'informations cartographiques (168) et/ou le signal de conditions environnementales (171), une exigence de conduite nécessaire représentant notamment une manoeuvre de conduite à exécuter.

3. Procédé (200) selon l'une des quelconque revendications précédentes, dans lequel, à l'étape (220) de la détermination du paramètre de comparaison (177), le degré d'une vigilance actuelle du conducteur (105) est déterminé en utilisant un signal de vigilance (180) d'un capteur d'habitacle (130) du véhicule (110), le signal de vigilance (180) représentant une direction du regard actuelle du conducteur (105) et/ou une position de la tête du conducteur (105) et/ou une position assise du conducteur (105) et/ou une position des mains du conducteur (105).

4. Procédé (200) selon l'une quelconque des revendications précédentes, dans lequel, à l'étape (240) de la vérification, l'opération de conduite automatisée est désactivée et/ou un transfert contrôlé de la tâche de conduite au conducteur (105) est provoqué après l'expiration d'une fenêtre temporelle prédéterminée, la fenêtre temporelle étant notamment supérieure à 3 secondes.

5. Procédé (200) selon l'une quelconque des revendications précédentes, dans lequel, à l'étape (220) de la détermination du paramètre de comparaison (177), il est déterminé si la valeur de probabilité de défaillance (165) calculée d'un système d'assistance au conducteur pour l'exécution d'une opération de conduite automatisée est au moins égale à 50 pour-cent, notamment à l'étape (230) de la fourniture, le signal de préalerte (183) étant fourni lorsque le paramètre de comparaison (177) déterminé représente un écart entre le degré d'une exigence de conduite nécessaire sur l'itinéraire parcouru du véhicule (110) et le degré d'une vigilance actuelle du conducteur (105).

6. Procédé (200) selon l'une quelconque des revendications précédentes, dans lequel, à l'étape (230) de la fourniture, le signal de préalerte (183) est délivré sous forme acoustique, optique et/ou haptique.

7. Procédé (200) selon l'une quelconque des revendications précédentes, dans lequel, à l'étape (230) de la fourniture, un signal d'alerte (186) est fourni à une unité de calcul (115) externe au véhicule et/ou, par le biais d'une interface de communication de véhicule à véhicule, à d'autres véhicules (189) qui se trouvent dans l'environnement du véhicule (110), le signal d'alerte (186) représentant un avertissement à propos d'une probabilité de défaillance d'un système d'assistance au conducteur visant à l'exécution d'une opération de conduite automatisée et/ou d'une désactivation d'une opération de conduite automatisée du véhicule (110).

8. Procédé (200) selon l'une quelconque des revendications précédentes, dans lequel, l'étape (210) du calcul et/ou l'étape (220) de la détermination et/ou l'étape (230) de la fourniture est/sont exécutée(s) sur une unité de calcul (115) externe au véhicule et/ou sur une unité de calcul montée dans le véhicule (110), en particulier l'étape (210) du calcul et/ou l'étape (220) de la détermination étant exécutée(s) de manière répétée.

9. Dispositif (100), qui est conçu pour exécuter et/ou commander les étapes (210, 220, 230, 240) du procédé (200) selon l'une quelconque des revendications précédentes dans des unités (153, 156, 159, 162) correspondantes.

10. Programme informatique, qui est conçu pour exécuter et/ou commander les étapes (210, 220, 230, 240) du procédé (200) selon l'une quelconque des revendications précédentes dans des unités (153, 156, 159, 162) correspondantes.

11. Support d'enregistrement lisible par machine, sur lequel est enregistré un programme informatique selon la revendication 10.
